# EUROPÄISCHE PATENTSCHRIFT

(11) **EP 0 374 648 B1**
(45) Veröffentlichungstag und Bekanntmachung des Hinweises auf die Patenterteilung: **21.09.1994**
(21) Anmeldenummer: 89122753.0
(22) Anmeldetag: 09.12.1989
(51) Int. Cl.: H05B 3/84, H05B 3/06

(54) **Vorrichtung zum Anschluss eines eletrischen Kabels**
Device for the connexion of an electric cable
Dispositif de connexion d'un câble électrique

(30) Priorität: 21.12.1988 DE 8815848 U
(43) Veröffentlichungstag der Anmeldung: 27.06.1990
(73) Patentinhaber: FLACHGLAS AKTIENGESELLSCHAFT, 90762 Fürth (DE)
(72) Erfinder: Eckardt, Rudolf, Dipl.-Ing., D-4230 Wesel (DE); Diedrichs, Bernd, D-4236 Hamminkeln (DE)
(74) Vertreter: Andrejewski, Walter

(56) Entgegenhaltungen:
- EP-A- 0 045 727
- DE-A- 3 919 974
- FR-A- 2 519 504
- US-A- 4 023 008

## Beschreibung

Die Erfindung betrifft eine Vorrichtung zum Anschluß eines elektrischen Kabels an einen auf einer Glasscheibe, insbesondere auf einer auch mehrschichtigen Kraftfahrzeugscheibe, angeordneten elektrischen Leiter, mit einem zentralen Bauteil, welches zwei als T-Arme abgewinkelte Lötanschlußfüße und eine mit dem Bauteil verbundene Aufsteckfahne aufweist, wobei das zentrale Bauteil (3) in einem randseitigen Leiterbereich der Glasscheibe befestigt ist und auf die Aufsteckfahne ein Kabelschuh aufsteckbar ist.

Der Ausdruck Kabel steht auch für isolierte elektrische Leiter der modernen Schwachstrom- und Radiotechnik.

Bei der bekannten Vorrichtung (DE-B-13 00 039), von der die Erfindung ausgeht und gegenüber welcher der Oberbegriff der Ansprüche 1 und 2 abgegrenzt wurde, ist ein zentrales Bauteil vorgesehen, welches zwei Lötanschlußfüße und eine mit dem zentralen Bauteil verbundene Aufsteckfahne aufweist. Das zentrale Bauteil ist als ein brückenartig geformtes Bauteil ausgeführt, welches z. B. aus einer Kupferlegierung oder einem anderen geeigneten Werkstoff besteht, wobei nur die Lötanschlußfüße mit der Glasscheibe durch Löten verbunden sind. Die bekannte Vorrichtung besteht aus einem einteiligen Blechzuschnitt. Zwischen den Brückenfüßen ist ein Brückenbogen angeordnet, der als elastisch oder bleibend sich verformendes Ausgleichselement bei unterschiedlichen Wärmedehnungen zwischen der Glasscheibe und der Vorrichtung insgesamt funktioniert. Die bekannte Ausführungsform mag ihre Funktion erfüllen und mit der Glasscheibe bei unterschiedlichen Wärmedehnungen und anderen mit kleiner Verformungsgeschwindigkeit ablaufenden Verformungsvorgängen fest verbunden bleiben. Es kommt jedoch zu unkontrolliertem Lötstellenbruch der angegebenen Lötstellen, wenn demgegenüber gleichsam plötzliche Beanspruchungen auftreten. Solche können z. B. auftreten, wenn mit den Hilfsmitteln der modernen robotergestützten Fertigungstechnik ein Kabelschuh aufgesteckt oder aufgestoßen wird.

Solche Lötstellenbrüche können aber auch durch dynamische Beanspruchungen im Betrieb auftreten.

Im übrigen kennt man in der Elektrotechnik Leiter, die rund oder flach als Litzen ausgeführt sind. Darunter versteht man gewebte, gewirkte oder geflochtene, langgestreckte Gesamtheiten aus einer Vielzahl von Einzeldrähten. Solche Litzen sind lange bekannt, haben jedoch zur Weiterentwicklung der eingangs beschriebenen Vorrichtung bisher nichts beigetragen.

Der Erfindung liegt die Aufgabe zugrunde, eine Vorrichtung des eingangs beschriebenen Aufbaus so weiter auszubilden, daß ein unkontrollierter Lötstellenbruch nicht mehr auftritt, und zwar auch nicht bei sehr plötzlichen mechanischen Beanspruchungen sowie unterschiedlichen Wärmedehnungen zwischen Glasscheibe und Anschlußteil .

Eine Lösung dieser Aufgabe ist durch die Merkmale des Patentanspruches 1 gegeben. Eine andere Lösung ist durch die Merkmale des Patentanspruches 2 gegeben.

Es versteht sich, daß das zentrale Bauteil erfindungsgemäß ein flexibles Bauteil ist. Die Verbindung der Aufsteckfahne mit dem zentralen Bauteil kann auf beliebige Weise, z. B. durch Anlöten, erfolgen. Stets wird man im Rahmen der Erfindung die Lötanschlußfüße vorbereitend mit einem Lot versehen.

An sich und für sich ist es bekannt (DE-B-11 34 802), bei Glasscheiben, die elektrische Widerstandsdrähte aufweisen, mit einer Stromzuführungsleitung zu arbeiten, die als biegsame Litze ausgeführt und mit sternförmig angeordneten Litzenarmen versehen ist. Auch ist es bekannt (DE-A-19 23 311) bei ähnlichen Glasscheiben mit Anschlußleitern aus Metallgeflechten zu arbeiten. Das alles hat zur Weiterentwicklung der eingangs beschriebenen Vorrichtung (DE-B-13 00 039) in Richtung auf eine Lösung der erfindungsgemäßen Aufgabe nichts beigetragen.

Im einzelnen bestehen im Rahmen der Erfindung mehrere Möglichkeiten der weiteren Ausbildung und Gestaltung. Im allgemeinen erfüllt die erfindungsgemäße Vorrichtung alle Forderungen und werden alle Beanspruchungen aufgenommen, wenn die Lötanschlußfüße jeder eine Länge von etwa 8 mm aufweisen. Dann ergibt sich, gleichsam orthogonal dazu, eine Breite für die Lötverbindung, die im Bereich von 4 mm oder sogar darunter liegt.

Das zentrale Bauteil (Litzenkörper) kann als einteiliger Litzenabschnitt ausgeführt und im Bereich der Lötanschlußfüße (Litzenfüße) in diese aufgeteilt sein. Es besteht aber auch die Möglichkeit, den Litzenkörper aus zwei parallelgeführten Litzenabschnitten aufzubauen, von denen jeder an einem Ende abgewinkelt ist und damit einen der Lötanschlußfüße bildet. Der Litzenkörper besitzt zweckmäßigerweise eine Länge von 10 bis 100 mm. Es versteht sich, daß der Litzenabschnitt eine isolierende Umhüllung aufweisen kann.

Im folgenden wird die Erfindung anhand einer lediglich Ausführungsbeispiele darstellenden Zeichnung ausführlicher erläutert. Es zeigen in schematischer Darstellung

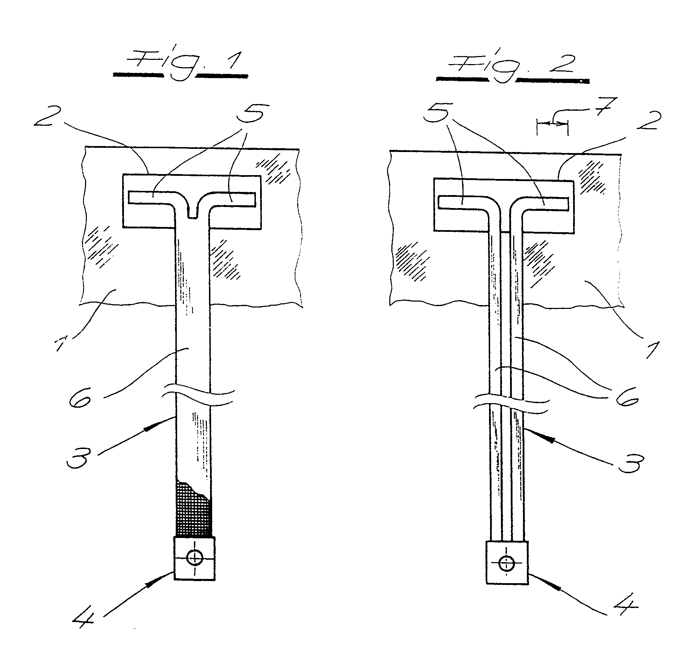

Fig. 1 und 2 eine Draufsicht auf zwei erfindungsgemäße Vorrichtungen.

Die in den Figuren dargestellte Vorrichtung dient zum Anschluß eines elektrischen Kabels an einen auf eine Glasscheibe 1, insbesondere auf eine Kraftfahrzeugscheibe, aufgedruckten elektrischen Leiter. Die Glasscheibe 1 wurde in den Figuren angedeutet. Sie besitzt zumindest einen aufgedruckten elektrischen Leiter, der nicht gezeichnet wurde, und ein sogenanntes Lötfenster 2.

Die Vorrichtung besteht aus einem zentralen Bauteil 3 (Lötanschlußbauteil) und einer Aufsteckfahne 4. Das Lötanschlußbauteil 3 ist zur Lötbefestigung in einem randseitigen Leiterbereich der Glasscheibe eingerichtet. Auf die Aufsteckfahne 4 ist ein Kabelschuh aufsteckbar. Man könnte die Aufsteckfahne durch eine Öse ersetzen.

Das Lötanschlußbauteil 3 besteht aus zwei Lötanschlußfüßen 5 (Litzenfüßen), die von einem Litzenabschnitt 6 wie T-Arme abgewinkelt sind. Die Aufsteckfahne 4 ist an dem den Litzenfüßen 5 gegenüberliegenden Ende an den Litzenabschnitt 6 angelötet. Die Litzenfüße 5 mögen jeder eine Länge von etwa 10 mm aufweisen. Der Lötbereich, der durch Doppelpfeil 7 angedeutet wurde, hat eine Länge von 4 mm oder weniger. Die Lötbereiche befinden sich an den Enden der Litzenfüße 5. Bei dem erfindungsgemäßen Lötanschlußbauteil läuft das Lot überraschenderweise nicht in den Litzenabschnitt 6. Dieser bleibt also biegsam und erfährt keine bruchfördernde Verfestigung.

Bei der Ausführungsform nach Fig. 1 ist der Litzenabschnitt 6 als einteiliger Litzenabschnitt ausgeführt und im Bereich der Litzenfüße 5 in diese aufgeteilt. Bei der Ausführungsform nach Fig. 2 besteht der Litzenabschnitt 6 aus zwei parallelgeführten Litzenabschnitten, von denen die Litzenfüße 5 abgewinkelt sind. Die beiden Litzenabschnitte der Fig. 2 könnten in einer Umhüllung angeordnet oder durch Lötpunkte vereinigt sein. Die Umhüllung kann ein Schrumpfschlauch sein. Der Litzenabschnitt 6 insgesamt mag eine Länge von 10 bis 100 mm besitzen.

## Patentansprüche

1. Vorrichtung zum Anschluß eines elektrischen Kabels an einen auf einer Glasscheibe (1), insbesondere auf einer auch mehrschichtigen Kraftfahrzeugscheibe, angeordneten elektrischen Leiter, mit einem zentralen Bauteil (3), welches zwei als T-Arme abgewinkelte Lötanschlußfüße (5) und eine mit dem Bauteil (3) verbundene Aufsteckfahne (4) aufweist, wobei das zentrale Bauteil (3) in einem randseitigen Leiterbereich der Glasscheibe (1) befestigt ist und auf die Aufsteckfahne (4) ein Kabelschuh aufsteckbar ist, **dadurch gekennzeichnet,** daß, für den Anschluß des Kabels an einer Glasscheibe (1) mit einem aufgedruckten elektrischen Leiter, das zentrale Bauteil (3) als einteiliger Litzenabschnitt (6) ausgeführt und an einem Ende in die beiden Lötanschlußfüße (5) aufgeteilt ist und daß mit dem Ende des Litzenabschnittes (6), welches den Lötanschlußfüßen gegenüberliegt, die Aufsteckfahne (4) verbunden ist.

2. Vorrichtung zum Anschluß eines elektrischen Kabels an einen auf einer Glasscheibe (1), insbesondere auf einer auch mehrschichtigen Kraftfahrzeugscheibe, angeordneten elektrischen Leiter, mit einem zentralen Bauteil (3), welches zwei als T-Arme abgewinkelte Lötanschlußfüße (5) und eine mit dem Bauteil (3) verbundene Aufsteckfahne (4) aufweist wobei das zentrale Bauteil (3) in einem randseitigen Leiterbereich der Glasscheibe (1) befestigt ist und auf die Aufsteckfahne (4) ein Kabelschuh aufsteckbar ist, **dadurch gekennzeichnet,** daß, für den Anschluß des Kabels an einer Glasscheibe (1) mit einem aufgedruckten elektrischen Leiter, das zentrale Bauteil (3) aus zwei parallelgeführten Litzenabschnitten (6) besteht, von denen jeder an einem Ende abgewinkelt ist und damit einen der Lötanschlußfüße (5) bildet, und daß mit den Enden der Litzenabschnitte (6), welche den Lötanschlußfüßen (5) gegenüberliegen, die Aufsteckfahne (4) verbunden ist.

3. Vorrichtung nach einem der Ansprüche 1 oder 2, dadurch gekennzeichnet, daß die Lötanschlußfüße (5) je eine Länge von etwa 8 mm aufweisen.

4. Vorrichtung nach einem der Ansprüche 1 bis 3, dadurch gekennzeichnet, daß das zentrale Bauteil (3) eine Länge von 10 bis 100 mm aufweist.

## Claims

1. An apparatus for connecting an electrical cable to an electrical conductor disposed on a glass pane (1), particularly on a motor vehicle glass which is also a multilayer glass, with a central component (3) which comprises two soldered connection terminals (5) bent in the form of the arms of a T and a push-on tab (4) connected to the component (3), wherein the central component (3) is attached in a conductor region at the edge of the glass pane (1) and a cable terminal can be pushed on to the push-on tab (4), characterised in that, for connecting the cable to a glass pane (1) with a printed-on electrical conductor, the central component (3) is fashioned as a one-piece braided section (6) and is split at one end into the two soldered connection terminals (5), and that the push-on tab (4) is connected to the end of the braided section (6) which is opposite the soldered connection terminals.

2. An apparatus for connecting an electrical cable to an electrical conductor disposed on a glass pane (1), particularly on a motor vehicle glass which is also a multilayer glass, with a central component (3) which comprises two soldered connection terminals (5) bent in the form of the arms of a T and a push-on tab (4) connected to the component (3), wherein the central component (3) is attached in a conductor region at the edge of the glass pane (1) and a cable terminal can be pushed on to the push-on tab (4), characterised in that, for connecting the cable to a glass pane (1) with a printed-on electrical conductor, the central component (3) consists of two parallel braided sections (6), each of which is bent at one end and thereby forms one of the soldered terminals (5), and that the push-on tab (4) is connected to the ends of the braided sections (6) which are opposite the soldered terminals (5).

3. An apparatus according to either one of claims 1 or 2, characterised in that the soldered connection terminals (5) each have a length of about 8 mm.

4. An apparatus according to any one of claims 1 to 3, characterised in that the central component (3) has a length of 10 to 100 mm.

## Revendications

1. Dispositif pour le raccordement d'un câble électrique à un conducteur électrique disposé sur une plaque de verre (1), en particulier sur une vitre, même feuilletée, d'un véhicule automobile, comprenant un élément central (3) muni de deux embouts de connexions soudées (5) coudés de façon à former des bras en T, et une cosse drapeau à rapporter (4) reliée à l'élément (3), l'élément central (3) étant fixé dans une zone marginale conductrice de la vitre (1) et une cosse de câble pouvant être enfichée sur la cosse drapeau à rapporter (4) caractérisé par le **fait** que, pour le raccordement du câble à un conducteur électrique imprimé sur une plaque de verre (1), l'élément central (3) est réalisé sous la forme d'une section de cordon (6) d'un seul tenant dont l'une des extrémité est divisée pour former les deux embouts de connexions soudées (5), et que la cosse drapeau à rapporter (4) est relié à l'extrémité de la section de cordon (6) opposée aux embouts des connexions soudées

2. Dispositif pour le raccordement d'un câble électrique à un conducteur électrique disposé sur une plaque de verre (1), en particulier sur une vitre, même feuilletée, d'un véhicule automobile, comprenant un élément central (3) muni de deux embouts de connexions soudées (5) coudés de façon à former des bras en T, et une cosse drapeau à rapporter (4) reliée à l'élément (3), l'élément central (3) étant fixé dans une zone marginale conductrice de la vitre (1) et une cosse de câble pouvant être enfichée sur la cosse drapeau à rapporter, caractérisé par le fait que, pour le raccordement du câble à un conducteur électrique imprimé sur une plaque de verre (1), l'élément central (3) est constitué de deux sections de cordon (6) parallèles dont chacune est coudée à l'une des extrémités et forme ainsi l'un des embouts de connexions soudées (5), et que la cosse drapeau à rapporter (4) est reliée aux extrémités des sections de cordon (6) opposées aux embouts des connexions soudés (5).

3. Dispositif selon l'une des revendications 1 ou 2, caractérisé par le fait que les embouts des connexions soudées (5) présentent à chaque fois une longueur d'environ 8 mm.

4. Dispositif selon l'une des revendications 1 à 3, caractérisé par le fait que l'élément central (3) présente une longueur comprise entre 10 et 100 mm.
